# EUROPÄISCHE PATENTSCHRIFT

(11) **EP 2 292 528 B1**
(45) Veröffentlichungstag und Bekanntmachung des Hinweises auf die Patenterteilung: **20.02.2013**
(21) Anmeldenummer: 09011364.8
(22) Anmeldetag: 04.09.2009
(51) Int. Cl.: A61C 19/02, B65D 85/20, A61C 8/00, B25H 3/00, B65D 25/10, B65D 81/05

(54) **Verpackungsgehäuse für ein längliches Objekt**
Packaging housing for an elongated object
Boîtier d'emballage pour un objet longitudinal

(43) Veröffentlichungstag der Anmeldung: 09.03.2011
(73) Patentinhaber: Straumann Holding AG, 4002 Basel (CH)
(72) Erfinder: GÜNTER, Daniel, CH-4002 Basel (CH); BRUNNER, Gideon, CH-4002 Basel (CH)
(74) Vertreter: Schaad, Balass, Menzl & Partner AG

(56) Entgegenhaltungen:
- DE-A1- 3 633 664
- DE-A1-102005 022 385
- DE-B3-102007 005 515
- GB-A- 2 335 911
- US-A- 4 413 731

## Beschreibung

Die vorliegende Erfindung betrifft ein Verpackungsgehäuse für ein längliches Objekt gemäss Anspruch 1, die Verwendung des Verpackungsgehäuses für einen Bohreraufsatz, insbesondere einen Dentalbohreraufsatz, gemäss Anspruch 14, sowie eine Verpackungsanordnung umfassend das Verpackungsgehäuse und das längliche Objekt gemäss Anspruch 15.

Verpackungsgehäuse für längliche Objekte, wie etwa Bohreraufsätze, sind schon seit langer Zeit bekannt. Beispielshalber wird diesbezüglich auf die US-B-5,775,499 und auf die US-A-2001/0008215 verwiesen, in welchen eine sich unter anderem für Bohrer(aufsätze) geeignete Verpackung beschrieben wird.

Dentalbohreraufsätze stellen aufgrund ihrer Fragilität speziell hohe Anforderungen an ihre Verpackung. Diese soll gewährleisten, dass der Dentalimplantatbohrer z.B. auch dann unversehrt bleibt, wenn die Verpackung zu Boden fällt.

Im Übrigen sind solche Dentalbohreraufsätze hinsichtlich ihrer Verwendung steril zu halten. Um eine Sterilität zu gewährleisten, soll einerseits mindestens die Bohrerspitze, also der Teil, der mit dem Gewebe des Patienten in Berührung kommt, bis kurz vor der Anwendung unter sterilen Bedingungen gehalten werden. Andererseits soll eine Entnahme des Bohreraufsatzes aus der Verpackung möglich sein, ohne dass dabei der schneidende Bereich des Bohrers (die "Bohrschneide") berührt wird.

Entsprechend wird in DE-A-102005022385 eine Einzelverpackung für bruchgefährdete Gegenstände beschrieben, welche einen Sockel mit einer nach oben gerichteten Aufnahmebohrung aufweist, worin das Fussstück des bruchgefährdeten Gegenstands eingesteckt ist und frei tragend herausragt. Der bruchgefährdete Gegenstand ist dabei mittels einer Schutzkappe geschützt. Die in der DE-A-102005022385 beschriebene Verpackung ist um eine zur Längsachse quer verlaufende Achse knickbar, wobei bei der Knickung der zu schützende Gegenstand frei zugänglich wird.

DE 10 2007 005515 B3 betrifft eine Einzelverpackung für Präzisionswerkzeuge, welche ein Sockelteil mit einer Aufnahmeöffnung zur Aufnahme eines Schaftes aufweist und einen Schutzteil umfasst, der aus einem Klemmteil und einem Aufnahmeteil besteht und in einer horizontalen Achse schwenkbar am Sockelteil angeordnet ist. Das Schutzteil wird gemäss D1 auf das zu schützende Präzisionswerkzeug aufgeschwenkt und übt dabei eine Klemmwirkung auf das zu schützende Präzisionswerkzeug aus.

Allerdings weist diese Verpackung den Nachteil auf, dass aufgrund der Anordnung des Bohrers in der Verpackung der Sockel bzw. die Aufnahmebohrung hochrein sein müssen, um eine unerwünschte Kontamination des Gegenstands zu verhindern. Dies bedingt einerseits eine geeignete Wahl des Materials der Verpackung, andererseits muss die Herstellung der Verpackung unter Reinraum-Bedingungen stattfinden, was oft mit einem relativ grossen Aufwand verbunden ist. Im Weiteren ist die visuelle Wahrnehmbarkeit des verpackten Objekts eingeschränkt, da es in einer Aufnahmebohrung versenkt ist. Ein dadurch verursachter Fehlgriff ist aber gerade bei Dentalbohreraufsätzen besonders unerwünscht, da die Sterilität nach Aufbrechen der sterilen Barriere nicht mehr gewährleistet werden kann und der Dentalbohreraufsatz somit weggeworfen werden muss.

Aufgabe der vorliegenden Erfindung ist es somit, ein Verpackungsgehäuse für ein längliches Objekt zur Verfügung zu stellen, welches es erlaubt, mindestens Teile des Objekts von Aussen gut sichtbar und unter sterilen Bedingungen zu halten und welches es gleichzeitig - ohne Einschränkung hinsichtlich des zur Herstellung verwendeten Materials - erlaubt, eine Kontamination besagter Teile auch bei der Entnahme des Objekts zu verhindern.

Die Aufgabe wird gelöst durch die Verpackung gemäss Anspruch 1. Bevorzugte Ausführungsformen der Verpackung sind in den abhängigen Ansprüchen angegeben.

Das Basiselement ist im Wesentlichen formstabil ausgestaltet und dient als Träger für das zu verpackende Objekt. Die von der Gehäusewand des Basiselements definierte Aufnahme weist dabei eine Längsachse auf, die im Wesentlichen koaxial zur Längsachse des Objekts in verpacktem Zustand verläuft.

Das Basiselement umfasst einen Kopfteil und einen in Richtung der Längsachse neben dem Kopfteil angeordneten Halteteil, der mit dem Kopfteil über eine Schwächungszone verbunden ist. Der Halteteil umfasst dabei mindestens ein Haltemittel, das dazu bestimmt ist, das zu verpackende Objekt im Halteteil zu halten.

Erfindungsgemäss ist die Schwächungszone eine Sollbruchstelle.

Das erfindungsgemässe Verpackungsgehäuse erlaubt es, das gesamte verpackte Objekt von Aussen gut sichtbar und bis kurz vor der Entnahme unter sterilen Bedingungen zu halten. Zur Entnahme wird das Verpackungsgehäuse an seiner Sollbruchstelle gebrochen. Nach dem Abbrechen des Kopfteils ragt das vom Haltemittel gehaltene verpackte Objekt frei tragend mit einem ersten proximalen Endbereich aus dem exponierten Ende des Halteteils heraus, während der dem proximalen Endbereich gegenüberliegende distale Endbereich des dem Halteteil entnommen werden; eine Berührung des sterilen, distalen Endbereichs des Objekts ist somit nicht nötig.

Erfindungsgemäss ist dem Halteteil des Objekts nun mindestens ein Abstandshalter zugeordnet, der derart ausgestaltet ist, dass das Objekt in verpacktem Zustand bezüglich des sich in Richtung der Längsachse erstreckenden Teils der Gehäusewand des Halteteils berührungsfrei gehalten wird. Dadurch wird gewährleistet, dass das Objekt von möglichen Kontaminationen ferngehalten wird, die beim Kontakt mit der Gehäusewand entstehen können. Dies ist insbesondere bei einem verpacktem Bohreraufsatz von Relevanz, da zwischen dem scharfkantigen Bohrergewinde der Bohrerspitze und der Gehäusewand ein Abrieb entstehen kann und die dabei gebildeten Materialspäne die Bohrerspitze verunreinigen können.

Wie erwähnt eignet sich das Verpackungsgehäuse der vorliegenden Erfindung in besonderer Weise für Objekte, die mindestens bereichsweise steril gehalten werden müssen und lediglich an jener Stelle mit einer nicht sterilen Fremdkomponente in Berührung kommen sollen, an der ein Greifen unumgänglich ist. Dabei ist das längliche Verpackungsobjekt derart angeordnet, dass der steril zu haltende, distale Endbereich im Halteteil und der gegriffene, proximale Endbereich im Kopfteil angeordnet ist. Im Falle eines (Dental-)Bohreraufsatzes, für welchen sich das Verpackungsgehäuse der vorliegenden Erfindung besonders eignet, ist somit die Bohrerspitze im Halteteil und der mit dem Bohrer zu verbindende Bohrerschaft im Kopfteil angeordnet.

Die Sollbruchstelle verläuft im Wesentlichen rechtwinklig zur Längsachse der Aufnahme, was ein möglichst einfaches Abbrechen des Kopfteils vom Halteteil ermöglicht.

Diese Sollbruchstelle kann etwa in Form von jeweils eine Brücke bildenden Verbindungspunkten vorliegen, die aus sprödem Material gebildet sind. In dieser bevorzugten Ausführungsform umfasst die Sollbruchstelle, somit mindestens eine Brücke, welche bei einem vorgegebenen Biegewinkel zwischen dem Kopfteil und dem Halteteil bricht. Dabei liegt der Biegewinkel besonders bevorzugt zwischen 45° und 90°.

Wie insbesondere auch aus den Figuren ersichtlich ist, ist der mindestens eine Abstandshalter in Form eines von der Aufnahme vorstehenden Vorsprungs ausgebildet, der eine Auflagefläche für das zu verpackende Objekt bildet. Eine sehr effiziente Ausgestaltung des Abstandshalters kann in dieser Ausführungsform etwa dann erreicht werden, wenn der Vorsprung an der tiefsten Stelle der Aufnahme vorsteht. Die Zahl der Abstandshalter bzw. deren Abstand untereinander kann je nach Objekt variieren.

Um aus den oben erwähnten Gründen die Kontaktfläche zwischen dem zu verpackenden Objekt und dem Basiselement möglichst gering zu halten, umfasst der Halteteil lediglich ein einzelnes Haltemittel. Dieses ist vorzugsweise in einem an die Sollbruchstelle angrenzenden Bereich angeordnet. Dadurch kann die Distanz zwischen dem Haltemittel und dem gegriffenen Bereich vermindert werden, wodurch ermöglicht wird, dass das gegriffene Objekt unter relativ geringem Kraftaufwand vom Haltemittel gelöst und aus dem Halteteil entnommen werden kann.

Bevorzugt ist das Haltemittel derart ausgestaltet, um das Objekt über eine Schnappverbindung zu halten. Besonders bevorzugt umfasst das Haltemittel zwei sich um die Längsachse der Aufnahme einander gegenüberliegend angeordnete elastische Schnapplippen. Zur Entnahme des Objekts wird dieses in Richtung von der Aufnahme weg bewegt, wobei die Schnapplippen seitlich ausgelenkt werden und nach der Entnahme des Objekts wieder zurückfedern. Vorzugsweise beträgt die für die Entnahme aufzuwendende Abzugskraft zwischen 3 und 6 N.

Eine besonders stabile Anordnung des Objekts im Verpackungsgehäuse kann dadurch ermöglicht werden, dass das Basiselement an den bezüglich der Längsachse der Aufnahme einander gegenüberliegenden Enden jeweils eine in einer rechtwinklig zur Längsachse verlaufenden Ebene liegende Endwand umfasst. Dadurch kann das Objekt zusätzlich vor einer Verschiebung in Längsrichtung gesichert werden.

Eine weitere Sicherung des Objekts kann dadurch gewährleistet werden, dass die Endwand des Kopfteils eine sich in Richtung der Aufnahme hin verjüngende Führung aufweist, die derart ausgestaltet ist, dass das Objekt über eine Klemmwirkung gehalten wird.

Wie erwähnt eignet sich das erfindungsgemässe Verpackungsgehäuse insbesondere für Objekte, die mindestens bereichsweise steril gehalten werden sollen. Entsprechend ist gemäss einer besonders bevorzugten Ausführungsform das Innere des Verpackungsgehäuses steril.

In der Regel wird die Aufnahme mit dem darin aufgenommenen Objekt mit einer Abdeckung geschützt. Um die Sichtbarkeit des Objekts von Aussen zu gewährleisten, wird die Aufnahme besonders bevorzugt durch eine Sichtverpackungsfolie abgedeckt, wodurch ein Blisterverpackungsgehäuse resultiert.

Gemäss einem weiteren Aspekt betrifft die Erfindung zudem eine Verpackungsanordnung umfassend das beschriebene Verpackungsgehäuse und ein längliches Objekt, insbesondere einen Bohreraufsatz. Liegt ein Bohreraufsatz als verpacktes Objekt vor, so ist es erfindungsgemäss möglich, diesen ohne Berührung der Bohrschneide aus dem Verpackungsgehäuse zu entnehmen.

In der Regel ist die Form der Aufnahme an die Form des zu verpackenden länglichen Objekts angepasst; im Falle eines Bohreraufsatzes als zu verpackendes Objekt ist das Kopfteil und/oder das Halteteil daher vorzugsweise im Wesentlichen wannenförmig ausgebildet.

Das Basiselement gemäss der vorliegenden Erfindung ist in der Regel aus Kunststoff gefertigt. Je nach Verwendung bzw. je nach Ausgestaltung der Sollbruchstelle, kann das Material dabei eine erhöhte Flexibilität bzw. Sprödigkeit aufweisen.

Typischerweise wird das Basiselement der vorliegenden Erfindung im Spritzgussverfahren hergestellt. Das Basiselement weist aus diesem Grunde vertiefte Bereiche für die Anspritzpunkte auf.

Die Erfindung wird anhand der Figuren im Detail erläutert, von denen:

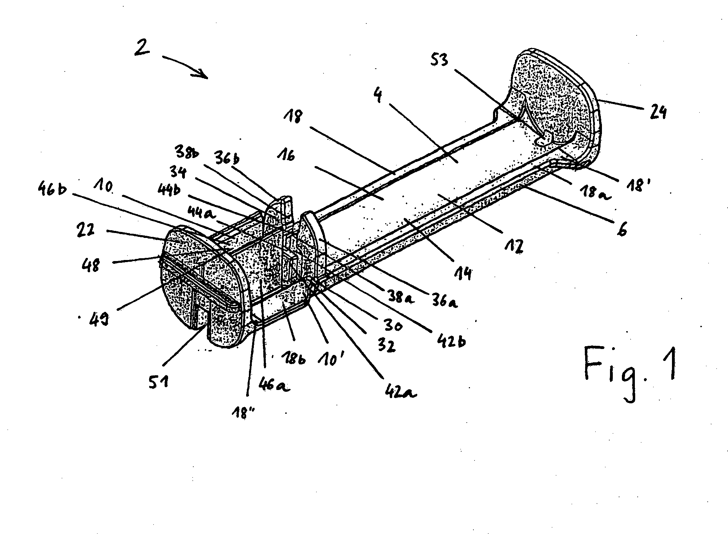

- Fig. 1: eine perspektivische Darstellung eines Basiselements eines erfindungsgemässen Verpackungsgehäuses, in dem die Schwächungszone in Form einer Sollbruchstelle ausgebildet ist;
- Fig. 2: eine Draufsicht auf die Längsseite des in Fig. 1 gezeigten Basiselements;
- Fig. 3: eine Draufsicht auf das in Fig. 1 gezeigte Basiselement von oben;

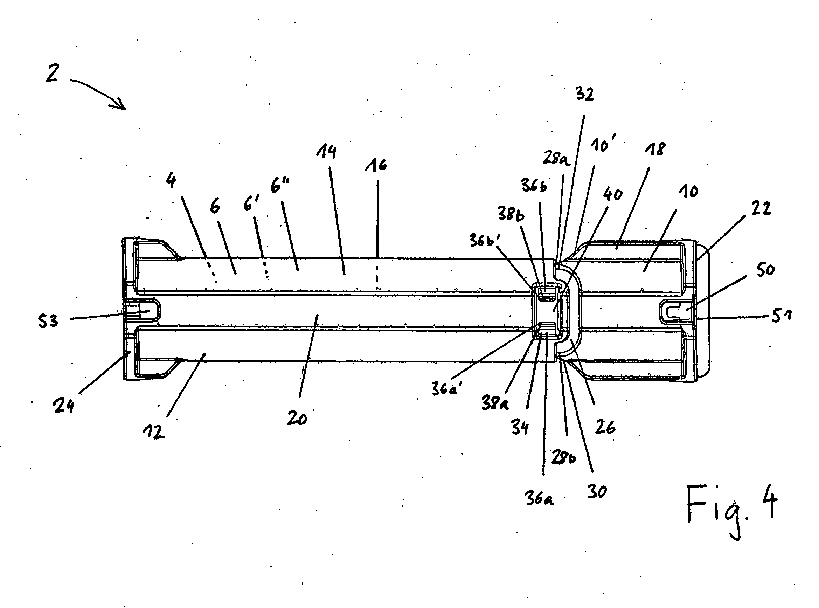

- Fig. 4: eine Draufsicht auf das in Fig. 1 gezeigte Basiselement von unten;
- Fig. 5: das in Fig. 1 gezeigte Basiselement im Querschnitt entlang der Linie A-A;
- Fig. 6: das in Fig. 1 gezeigte Basiselement im Querschnitt entlang der Linie B-B;
- Fig. 7: das in Fig. 1 gezeigte Basiselement im Querschnitt entlang der Linie C-C;
- Fig. 8: das in Fig. 1 gezeigte Basiselement im Querschnitt entlang der Linie D-D;
- Fig. 9: das in Fig. 1 gezeigte Basiselement im Querschnitt entlang der Linie E-E;

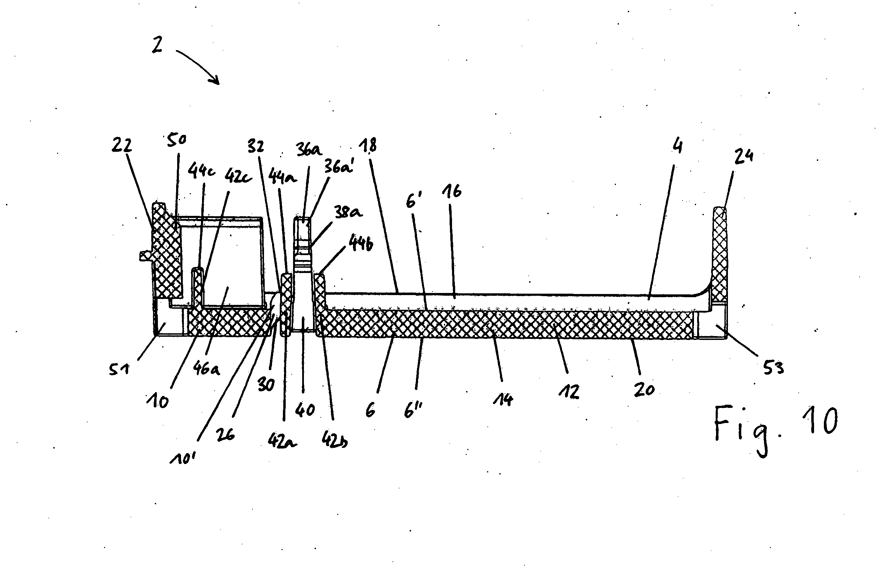

- Fig. 10: das in Fig. 1 gezeigte Basiselement im Längsschnitt entlang der Linie F-F;
- Fig. 11: eine vergrösserte Ansicht des in Fig. 2 gezeigten Ausschnitts X, in welcher die Sollbruchstelle im Detail gezeigt ist;
- Fig. 12: eine Draufsicht auf die Längsseite eines Basiselements einer Knickzone anstelle einer Sollbruchstelle;
- Fig. 13: eine perspektivische Darstellung des in den Fig. 1 gezeigten Basiselements mit einem von diesem gehaltenen Bohreraufsatz zeigt.

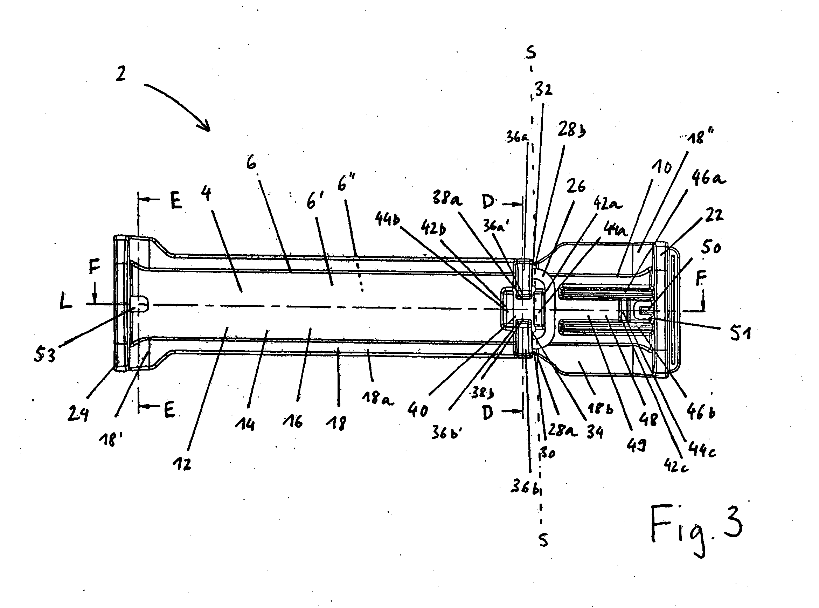

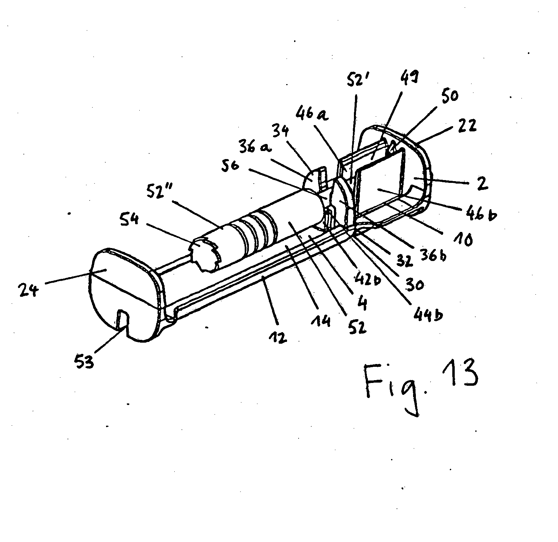

Das Basiselement 2 gemäss der in den Fig.s 1 bis 11 und 13 gezeigten Ausführungsform weist eine eine Aufnahme 4 für ein Objekt definierende Gehäusewand 6 auf. Die Aufnahme 4 weist eine in Fig. 3 gezeigte Längsachse L auf, die im Wesentlichen koaxial zur Längsachse des Objekts 8 in verpacktem Zustand verläuft, wie im Übrigen aus Fig. 13 hervorgeht.

Das Basiselement 2 umfasst einen Kopfteil 10 und einen in Richtung der Längsachse L neben dem Kopfteil 10 angeordneten Halteteil 12. Dabei ist der Halteteil 12 länger ausgestaltet als der Kopfteil 10. In der gezeigten Ausführungsform liegt das Verhältnis der Ausdehnung des Halteteils 12 in Längsrichtung zur entsprechenden Ausdehnung des Kopfteils 10 ca. bei 3:1. Denkbar ist aber auch jedes andere für die vorliegenden Zwecke geeignete Verhältnis.

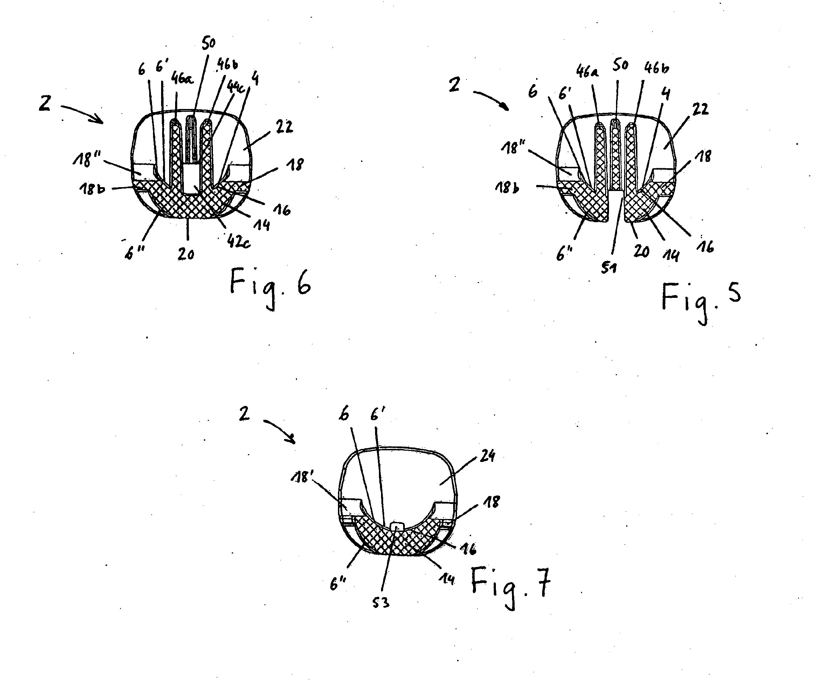

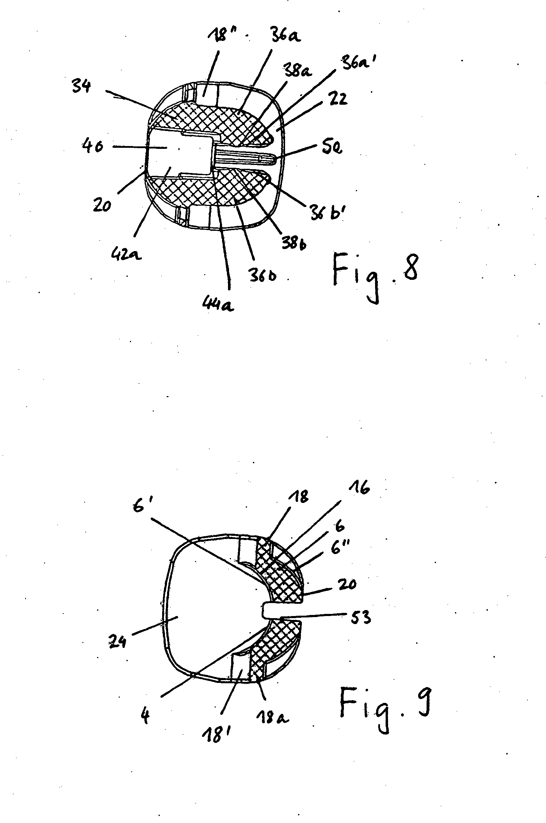

Sowohl der Kopfteil 10 als auch der Halteteil 12 sind im Wesentlichen in Form einer Wanne 14 mit einem im Querschnitt sichelförmigen Wannenboden 16 und einem horizontal nach Aussen abstehenden Wannenrand 18 ausgestaltet, wie insbesondere aus den Fig.s 5 und 6 ersichtlicht ist. Somit weist die Innenseite 6' der Gehäusewand 6 des Basisteils 2 eine im Wesentlichen runde Wölbung auf. Um zu gewährleisten, dass das Verpackungsgehäuse stabil auf eine ebene Grundlage gestellt werden kann, weist die Aussenseite 6" des Wannenbodens 16 eine entsprechende Abflachung 20 auf. Wie etwa aus den Fig. 5 und 6 im Vergleich mit den Fig. 7 und 9 ersichtlich ist, ist das Querschnittsprofil des Wannenbodens 16 des Kopfteils 10 mit demjenigen des Halteteils im Wesentlichen deckungsgleich.

An den bezüglich der Längsachse L einander gegenüberliegenden Enden umfasst das Basiselement 2 jeweils eine in einer rechtwinklig zur Längsachse verlaufenden Ebene liegende Endwand: Am freien Ende des Kopfteils 10 ist eine erste, proximale Endwand 22 angeordnet, während am freien Ende des Halteteils 12 eine zweite, distale Endwand 24 angeordnet ist, die in einer zur proximalen Endwand 22 im Wesentlichen parallel verlaufenden Ebene liegt. Beide Endwände 22, 24 sind - wie z.B. in den Fig.s 5, 6 und 8 bzw. 7 und 9 - in etwa in Form eines Trapezes mit abgerundeten Ecken im Wesentlichen deckungsgleich zueinander ausgebildet.

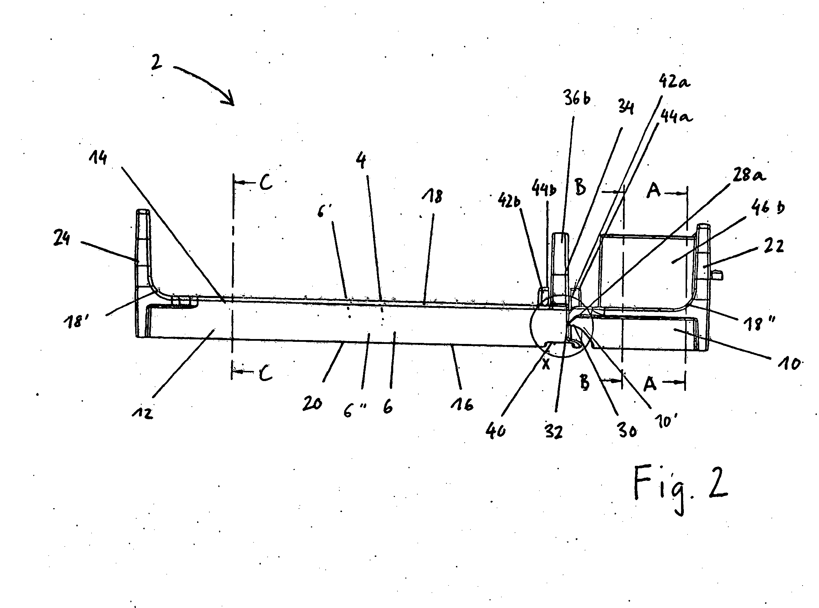

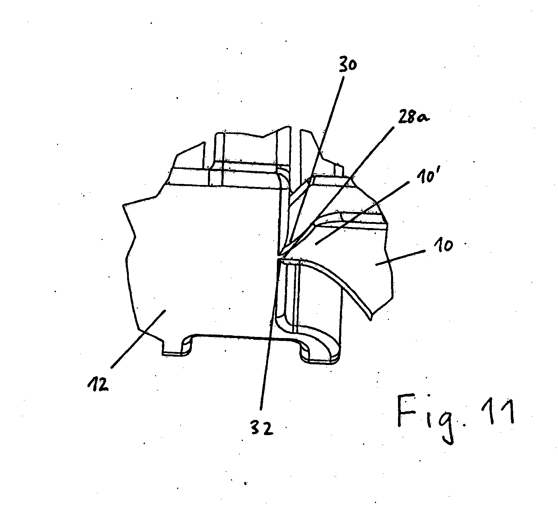

Wie insbesondere aus dem in Fig. 3 gezeigten Breitenprofil ersichtlich ist, verbreitert sich der Wannenrand 18 des Halteteils 12 in dem an die distale Endwand 24 benachbarten distalen Endbereich 18' zur distalen Endwand 24 hin. An seiner breitesten Stelle entspricht die Breite In dem an den Halteteil 12 angrenzenden Bereich 10' des Kopfteils 10 verjüngt sich der Wannenrand 18 zum Halteteil 12 hin. Wie im Übrigen aus Fig. 2 und 11 gezeigt ist, verjüngt sich das Kopfteil 10 in diesem Bereich auch in der Dicke; die Innenseite des Wannenbodens 16 ist in besagtem Bereich konvex gewölbt ausgestaltet. Wie insbesondere aus Fig. 3 ersichtlich ist, ist im Verbindungsbereich zwischen Halteteil 12 und Kopfteil 10 ein Spalt 26 ausgebildet, sodass die Verbindung lediglich über zwei jeweils eine Brücke 28a bzw. 28b bildende Verbindungspunkte bewerkstelligt wird.

Die beiden Brücken 28a, 28b liegen in einer Schwächungszone 30 und bilden eine Schwenkachse S, um die der Kopfteil 10 aus der Richtung der Längsachse L ausgelenkt werden kann. Mindestens in dieser Schwächungszone 30 ist das Material des Basiselements 2 spröde, sodass schon eine relativ geringe Auslenkung zum Bruch der Verbindung führt. In der gezeigten Ausführungsform bildet die Schwächungszone 30 somit eine Sollbruchstelle 32.

Unmittelbar an den an die Schwächungszone 30 anschliessenden Bereich des Halteteils 12 ist ein vom Wannenboden 16 vorstehendes Haltemittel 34 angeordnet. Dieses umfasst zwei um die Längsachse L herum angeordnete elastische Schnapplippen 36a, 36b, welche auf ihrer der Längsachse L zugewandten Innenseite 36a', 36b' jeweils eine Nase 38a bzw. 38b aufweisen. Die Schnapplippen 36a, 36b sind derart ausgestaltet, dass sie beim Einführen des zu verpackenden Objekts seitlich ausgelenkt werden und nach Überwinden der Nasen 38a, 38b elastisch zurückfedern, wodurch ein Einrasten und somit ein stabiles Halten des länglichen Objekts gewährleistet wird. Um zu verhindern, dass bei der seitlichen Auslenkung der Schnapplippen 36a, 36b der Wannenboden 16 zu stark beansprucht wird, weist dieser zwischen den Schnapplippen 36a, 36b eine Öffnung 40 auf.

Die Schnapplippen 36a, 36b sind in Richtung der Längsachse L beidseitig von je einem mittig angeordneten Abstandshalter 42a bzw. 42b flankiert. Diese bilden je eine Auflagefläche 44a bzw. 44b für das längliche Objekt. Wie insbesondere aus Fig. 3 ersichtlich ist, ist der Spalt 26 im Wesentlichen U-förmig ausgebildet, wobei der auf der dem Kopfteil 10 zugewandten Seite angeordnete Abstandshalter 42a zwischen den Schenkeln des U's zu liegen kommt.

Im Übrigen weist die proximale Endwand 22 zwei sich beinahe über die gesamte Länge des Kopfteils erstreckende Vorsprünge 46a, 46b auf. Diese definieren eine Nut 48, die als Führung 49 für das längliche Objekt dient. Die Nut 48 ist derart ausgestaltet, dass sie sich in Richtung zum Wannenboden 16 hin leicht verjüngt, was gewährleistet, dass das längliche Objekt zusätzlich zu der mittels des Haltemittels 34 bewerkstelligten Schnappverbindung durch Klemmwirkung gehalten wird. Zwischen den Vorsprüngen 46a, 46b ist ein weiterer, vom Wannenboden 16 des Kopfteils 10 vorstehender Abstandshalter 42c angeordnet, der eine weitere Auflagefläche 44c für das zu verpackende Objekt bildet. Im Übrigen ist zwischen den Vorsprüngen 46a, 46b eine von der proximalen Endwand 22 vorstehende Leiste 50 angeordnet, die als Abstandshalter zwischen der proximalen Endwand 22 und dem proximalen Ende des zu verpackenden Objekts dient.

Wie insbesondere etwa aus Fig.s 5, 9 und 10 ersichtlich ist, weist das Basiselement 2 sowohl im proximalen Endbereich als auch im distalen Endbereich eine mittig angeordnete Öffnung 51 bzw. 53 zur Entwässerung der Aufnahme 4 nach der Reinigung des Objekts auf.

Bei der Einführung eines Objekts in das Basisteil 2 wird der proximale Endbereich des Objekts somit in der Nut 48 des Kopfteils geführt. Gleichzeitig werden die Schnapplippen 36a, 36b des Halteteils 12 seitlich ausgelenkt und federn nach Überwinden der Nasen 38a, 38b elastisch zurück, wodurch ein Einrasten und somit ein stabiles Halten des länglichen Objekts gewährleistet wird. Das Objekt kann dann zusammen mit dem Basisteil 2 mit einer Schutzabdeckung, wie etwa einer Sichtverpackungsfolie versehen werden.

Um das Objekt zu entnehme, wird das Kopfteil 10 vom Halteteil 12 abgebrochen, wonach durch die Anordnung der Abstandshalter 42a, 42b des Halteteils 12 und des Haltemittels 34 das Objekt frei tragend aus dem Halteteil 12 herausragt. An diesem herausragenden proximalen Endbereich 22 kann das Objekt gegriffen werden, ohne dass die Sterilität des im Halteteil 12 angeordneten distalen Endbereichs beeinträchtigt würde. Es ist also bei einem in einem erfindungsgemässen Verpackungsgehäuse verpackten Bohreraufsatz möglich, diesen ohne Berührung der Bohrschneide zu entnehmen.

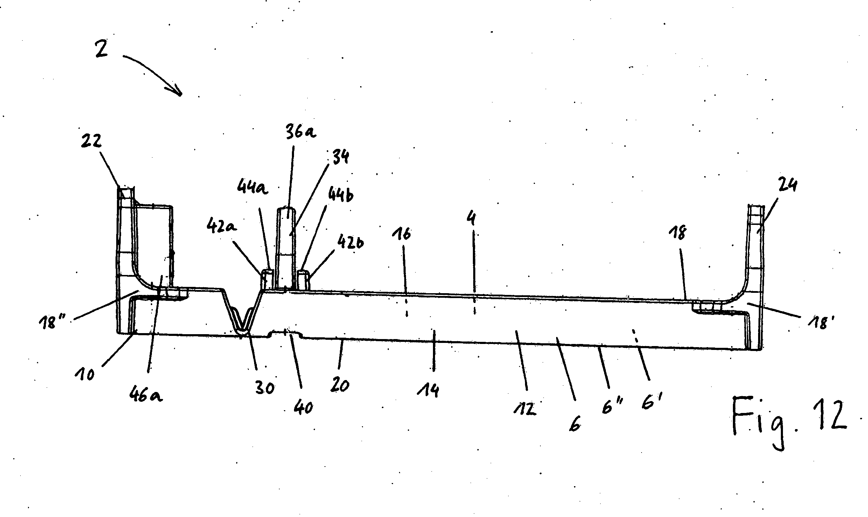

Im Gegensatz zu der Schwächungszone gemäss der in den Fig.s 1 bis 11 gezeigten Ausführungsform gemäss der vorliegenden Erfindung ist in dem in Fig. 12 gezeigten Basiselement die Verbindungszone zwischen Kopfteil 10 und Halteteil 12 als durchgehende Fläche ausgebildet.

Wie in Fig. 13 gezeigt ist, kann es sich beim Objekt 8 um einen Bohreraufsatz 52 handeln, dessen proximaler, also dem Bohrer zugewandte Endbereich 52' im Kopfteil angeordnet ist und dessen distaler, die Bohrerspitze 54 mit dem Bohrergewinde (nicht gezeigt) aufweisende Endbereich 52" im Halteteil 12 angeordnet ist. Der Bohreraufsatz 52 wird dabei an seinem Schaft 56 vom Haltemittel 34 gehalten bzw. mittels der Führung 49 im Kopfteil 10 fixiert. Zur Entnahme des Bohreraufsatzes wird das Kopfteil 10 abgebrochen, wonach der Bohreraufsatz 52 mit seinem proximalen Endbereich 52' frei tragend aus dem Halteteil 12 ragt und mit dem Bohrer verbunden werden kann. Der derart am Bohrer befestigte Bohreraufsatz 52 kann dann aus dem Halteteil 12 entnommen werden, ohne dass der distale Endbereich 52" des Bohreraufsatzes 52 berührt wird.

## Patentansprüche

1. Verpackungsgehäuse für ein längliches Objekt (8) umfassend ein Basiselement (2) mit einer eine Aufnahme (4) für das Objekt (8) definierenden Gehäusewand (6), wobei die Aufnahme (4) eine Längsachse (L) aufweist, die im Wesentlichen koaxial zur Längsachse des Objekts (8) in verpacktem Zustand verläuft und das Basiselement (2) einen Kopfteil (10) und einen in Richtung der Längsachse (L) neben dem Kopfteil (10) angeordneten Halteteil (12) umfasst, der mit dem Kopfteil (10) über eine Schwächungszone (30) verbunden ist und der mindestens ein Haltemittel (34) umfasst, das dazu bestimmt ist, das Objekt (8) im Halteteil (12) zu halten, **dadurch gekennzeichnet, dass** die Schwächungszone (30) eine Sollbruchstelle (32) ist und dem Haltemittel (34) mindestens ein Abstandshalter (42, 42b) zugeordnet ist, der derart ausgestaltet ist, dass das Objekt (8) in verpacktem Zustand bezüglich des sich in Richtung der Längsachse (L) erstreckenden Teils der Gehäusewand (6) des Halteteils (12) berührungsfrei gehalten wird, wobei das Verpackungsgehäuse derart ausgestaltet ist, dass es zur Entnahme des verpackten Objekts (8) an der Sollbruchstelle (32) gebrochen werden kann, um den Kopfteil (10) vom Halteteil (12) abzubrechen, und die Sollbruchstelle (32) im Wesentlichen rechtwinklig zur Längsachse (L) der Aufnahme (4) verläuft.

2. Verpackungsgehäuse gemäss Anspruch 1, **dadurch gekennzeichnet, dass** die Sollbruchstelle (32) mindestens eine Brücke (28a, 28b) umfasst, welche bei einem vorgegebenen Biegewinkel zwischen dem Kopfteil (10) und dem Halteteil (12) bricht.

3. Verpackungsgehäuse gemäss einem der vorhergehenden Ansprüche, **dadurch gekennzeichnet, dass** der mindestens eine Abstandshalter (42a, 42b) in Form eines von der Aufnahme (4) vorstehenden Vorsprungs ausgebildet ist, der eine Auflagefläche (44a bzw. 44b) für das Objekt bildet.

4. Verpackungsgehäuse gemäss Anspruch 3, **dadurch gekennzeichnet, dass** der Vorsprung an der tiefsten Stelle der Aufnahme (4) vorsteht.

5. Verpackungsgehäuse gemäss einem der vorhergehenden Ansprüche, **dadurch gekennzeichnet, dass** der Halteteil (12) lediglich ein einzelnes Haltemittel (34) umfasst.

6. Verpackungsgehäuse gemäss einem der vorhergehenden Ansprüche, **dadurch gekennzeichnet, dass** das Haltemittel (34) in einem an die Sollbruchstelle (32) angrenzenden Bereich angeordnet ist.

7. Verpackungsgehäuse gemäss einem der vorhergehenden Ansprüche, **dadurch gekennzeichnet, dass** das Haltemittel (34) derart ausgestaltet ist, um das Objekt über eine Schnappverbindung zu halten.

8. Verpackungsgehäuse gemäss Anspruch 7, **dadurch gekennzeichnet, dass** das Haltemittel (34) zwei sich um die Längsachse (L) der Aufnahme (4) einander gegenüberliegend angeordnete elastische Schnapplippen (36a, 36b) umfasst.

9. Verpackungsgehäuse gemäss einem der vorhergehenden Ansprüche, **dadurch gekennzeichnet, dass** das Innere des Verpackungsgehäuses steril ist.

10. Verpackungsgehäuse gemäss einem der vorhergehenden Ansprüche, **dadurch gekennzeichnet, dass** das Basiselement (2) an den bezüglich der Längsachse (L) der Aufnahme (4) einander gegenüberliegenden Enden jeweils eine in einer rechtwinklig zur Längsachse verlaufenden Ebene liegende Endwand (22, 24) umfasst.

11. Verpackungsgehäuse nach einem der vorhergehenden Ansprüche, **dadurch gekennzeichnet, dass** die Endwand (22) des Kopfteils (10) eine sich in Richtung zur Aufnahme (4) hin verjüngende Führung (49) aufweist, die derart ausgestaltet ist, dass das Objekt (8) über eine Klemmwirkung gehalten wird.

12. Verpackungsgehäuse nach einem der vorhergehenden Ansprüche, **dadurch gekennzeichnet, dass** das Kopfteil (10) und/oder das Halteteil (12) im Wesentlichen wannenförmig ausgebildet sind.

13. Verpackungsgehäuse nach einem der vorhergehenden Ansprüche, **dadurch gekennzeichnet, dass** die Aufnahme (4) durch eine Sichtverpackungsfolie abgedeckt ist.

14. Verwendung der Verpackung nach einem der vorhergehenden Ansprüche für einen Bohreraufsatz, insbesondere einen Dentalbohreraufsatz.

15. Verpackungsanordnung umfassend ein Verpackungsgehäuse gemäss einem der Ansprüche 1 bis 13 und ein längliches Objekt.

16. Verpackungsanordnung gemäss Anspruch 15, **dadurch gekennzeichnet, dass** das Objekt ein Bohreraufsatz, insbesondere ein Dentalbohreraufsatz ist.

## Claims

1. Package housing for an elongate object (8), comprising a base element (2) having a housing wall (6) defining a receptacle (4) for the object (8), wherein the receptacle (4) has a longitudinal axis (L) which runs substantially coaxially to the longitudinal axis of the object (8) in the packed state and the base element (2) comprises a head part (10) and a holding part (12) arranged in the direction of the longitudinal axis (L) next to the head part (10), which holding part is connected to the head part (10) by a weakening zone (30) and comprises at least one holding means (34), which is intended to hold the object (8) in the holding part (12), **characterized in that** the weakening zone (30) is a predetermined breaking point (32) and the holding means (34) is assigned at least one spacer (42a, 42b), which is configured such that the object (8), in the packed state, is held in a contact-free manner with respect to that part of the housing wall (6) of the holding part (12) which extends in the direction of the longitudinal axis (L), wherein the package housing is configured such that, for the removal of the packed object (8), it can be broken at the predetermined breaking point (32), in order for the head part (10) to be broken off from the holding part (12), and the predetermined breaking point (32) runs substantially at right angles to the longitudinal axis (L) of the receptacle (4).

2. Package housing according to Claim 1, **characterized in that** the predetermined breaking point (32) comprises at least one bridge (28a, 28b), which breaks in the case of a predefined bending angle between the head part (10) and the holding part (12).

3. Package housing according to one of the preceding claims, **characterized in that** the at least one spacer (42a, 42b) is configured in the form of a protrusion protruding from the receptacle (4), which protrusion forms a support surface (44a and 44b) for the object.

4. Package housing according to claim 3, **characterized in that** the protrusion protrudes at the deepest point of the receptacle (4).

5. Package housing according to one of the preceding claims, **characterized in that** the holding part (12) comprises just a single holding means (34).

6. Package housing according to one of the preceding claims, **characterized in that** the holding means (34) is disposed in a region adjoining the predetermined breaking point (32).

7. Package housing according to one of the preceding claims, **characterized in that** the holding means (34) is configured such as to hold the object by means of a snap-locking connection.

8. Package housing according to Claim 7, **characterized in that** the holding means (34) comprises two elastic snap-locking lips (36a, 36b) arranged lying opposite each other about the longitudinal axis (L) of the receptacle (4).

9. Package housing according to one of the preceding claims, **characterized in that** the inside of the package housing is sterile.

10. Package housing according to one of the preceding claims, **characterized in that** the base element (2), at the ends lying opposite each other with respect to the longitudinal axis (L) of the receptacle (4), respectively comprises an end wall (22, 24) lying in a plane running at right angles to the longitudinal axis.

11. Package housing according to one of the preceding claims, **characterized in that** the end wall (22) of the head part (10) has a guide (49) which tapers in the direction of the receptacle (4) and which is configured such that the object (8) is held by means of a clamping action.

12. Package housing according to one of the preceding claims, **characterized in that** the head part (10) and/or the holding part (12) is/are configured substantially in the form of a trough.

13. Package housing according to one of the preceding claims, **characterized in that** the receptacle (4) is covered by a see-through packaging film.

14. Use of the package housing according to one of the preceding claims for a drill attachment, in particular a dental drill attachment.

15. Packaging arrangement comprising a package housing according to one of Claims 1 to 13, and an elongate object.

16. Packaging arrangement according to Claim 15, **characterized in that** the object is a drill attachment, in particular a dental drill attachment.

## Revendications

1. Boîtier d'emballage pour un objet allongé (8), comportant un élément de base (2) doté d'une paroi de boîtier (6) définissant un logement (4) pour l'objet (8), le logement (4) présentant un axe longitudinal (L) qui s'étend essentiellement de manière coaxiale par rapport à l'axe longitudinal de l'objet (8) dans l'état emballé et l'élément de base (2) comportant une partie de tête (10) et une partie de maintien (12) disposée à côté de la partie de tête (10) dans la direction de l'axe longitudinal (L), laquelle partie de maintien est reliée à la partie de tête (10) par l'intermédiaire d'une zone d'affaiblissement (30) et comporte au moins un moyen de maintien (34) qui est destiné à maintenir l'objet (8) dans la partie de maintien (12), **caractérisé en ce que** la zone d'affaiblissement (30) est un point de rupture (32) et au moins une pièce d'écartement (42, 42b) est associée au moyen de maintien (34), laquelle est configurée de telle sorte que, dans l'état emballé, l'objet (8) soit maintenu sans contact par rapport à la partie de la paroi de boîtier (6) de la partie de maintien (12) s'étendant dans la direction de l'axe longitudinal (L), le boîtier d'emballage étant configuré de telle sorte qu'il puisse être rompu au point de rupture (32) pour retirer l'objet emballé (8), afin de séparer la partie de tête (10) de la partie de maintien (12), et le point de rupture (32) s'étendant essentiellement perpendiculairement à l'axe longitudinal (L) du logement (4).

2. Boîtier d'emballage selon la revendication 1, **caractérisé en ce que** le point de rupture (32) comporte au moins un pont (28a, 28b) qui se rompt en présence d'un angle de flexion prédéfini entre la partie de tête (10) et la partie de maintien (12) .

3. Boîtier d'emballage selon l'une quelconque des revendications précédentes, **caractérisé en ce que** l'au moins une pièce d'écartement (42a, 42b) est réalisée sous la forme d'une saillie faisant saillie depuis le logement (4), laquelle saillie forme une surface d'appui (44a ou 44b) pour l'objet.

4. Boîtier d'emballage selon la revendication 3, **caractérisé en ce que** la saillie fait saillie au point le plus bas du logement (4).

5. Boîtier d'emballage selon l'une quelconque des revendications précédentes, **caractérisé en ce que** la partie de maintien (12) comporte seulement un moyen de maintien unique (34).

6. Boîtier d'emballage selon l'une quelconque des revendications précédentes, **caractérisé en ce que** le moyen de maintien (34) est disposé dans une région adjacente au point de rupture (32).

7. Boîtier d'emballage selon l'une quelconque des revendications précédentes, **caractérisé en ce que** le moyen de maintien (34) est configuré pour maintenir l'objet au moyen d'une liaison par encliquetage.

8. Boîtier d'emballage selon la revendication 7, **caractérisé en ce que** le moyen de maintien (34) comporte deux lèvres encliquetables (36a, 36b) élastiques disposées de manière opposée l'une à l'autre autour de l'axe longitudinal (L) du logement (4) .

9. Boîtier d'emballage selon l'une quelconque des revendications précédentes, **caractérisé en ce que** l'intérieur du boîtier d'emballage est stérile.

10. Boîtier d'emballage selon l'une quelconque des revendications précédentes, **caractérisé en ce que** l'élément de base (2) comporte respectivement, aux extrémités opposées l'une à l'autre par rapport à l'axe longitudinal (L) du logement (4), une paroi d'extrémité (22, 24) située dans un plan s'étendant perpendiculairement à l'axe longitudinal.

11. Boîtier d'emballage selon l'une quelconque des revendications précédentes, **caractérisé en ce que** la paroi d'extrémité (22) de la partie de tête (10) comprend un guide (49) se rétrécissant en direction du logement (4), lequel guide est configuré de telle sorte que l'objet (8) soit maintenu au moyen d'une action de serrage.

12. Boîtier d'emballage selon l'une quelconque des revendications précédentes, **caractérisé en ce que** la partie de tête (10) et/ou la partie de maintien (12) sont réalisées essentiellement en forme de bac.

13. Boîtier d'emballage selon l'une quelconque des revendications précédentes, **caractérisé en ce que** le logement (4) est recouvert par un film d'emballage transparent.

14. Utilisation de l'emballage selon l'une quelconque des revendications précédentes pour un embout de fraise, en particulier un embout de fraise dentaire.

15. Ensemble d'emballage comportant un boîtier d'emballage selon l'une quelconque des revendications 1 à 13 et un objet allongé.

16. Ensemble d'emballage selon la revendication 15, **caractérisé en ce que** l'objet est un embout de fraise, en particulier un embout de fraise dentaire.
